# EUROPÄISCHE PATENTSCHRIFT

(11) **EP 3 041 766 B1**
(45) Veröffentlichungstag und Bekanntmachung des Hinweises auf die Patenterteilung: **10.05.2017**
(21) Anmeldenummer: 14780743.2
(22) Anmeldetag: 04.09.2014
(51) Int. Cl.: B65G 15/36, B65G 15/44, B65G 19/02, B67B 3/06, B65G 15/14

(54) **FÖRDERABSCHNITT**
CONVEYOR PORTION
SECTION DE TRANSPORT

(30) Priorität: 04.09.2013 AT 2862013 U
(43) Veröffentlichungstag der Anmeldung: 13.07.2016
(73) Patentinhaber: Gassner GmbH, 4890 Frankenmarkt (AT)
(72) Erfinder: GASSNER, Wolfgang, A-4890 Frankenmarkt (AT)
(74) Vertreter: KLIMENT & HENHAPEL
(86) Internationale Anmeldenummer: PCT/AT2014/050196
(87) Internationale Veröffentlichungsnummer: WO 2015/042624

(56) Entgegenhaltungen:
- EP-A1- 2 586 715
- WO-A1-2006/102641
- DE-A1- 3 001 531
- DE-U1-202012 104 467
- GB-A- 2 069 436
- JP-A- 2000 159 321
- US-A- 1 547 276
- US-A- 2 400 667
- US-A- 3 978 971
- US-A- 5 915 525

## Beschreibung

### GEBIET DER ERFINDUNG

Die vorliegende Erfindung betrifft einen Förderabschnitt gemäß dem Oberbegriff des unabhängigen Anspruchs 1.

### STAND DER TECHNIK

Kleinteile, wie z.B. Flaschenverschlüsse, die bereits vororientiert sind, werden horizontal üblicherweise mittels Bandförderern oder mittels Luftförderern befördert. Luftförderer können auch in leicht ansteigendem Winkel Steigungen überwinden, wobei je nach Typ, Gestalt und Werkstoff der Verschlüsse Anstiege von 10° bis 30° möglich sind. Je steiler der Anstieg, desto höhere Luftdrücke werden benötigt. Der Energiebedarf steigt sehr stark an, zugleich steigt der Abrieb der Verschlüsse, und die Methode ist dann nicht mehr schonend und aufgrund des Abriebs in Verbindung mit den entstehenden Luftverwirbelungen auch nicht mehr hygienisch. Das Fördern von Flaschenverschlüssen über steile Steigungen ist daher mit bekannten Luftförderern hygienisch einwandfrei nicht möglich.

Alternativ dazu sind seit ca. 10 Jahren für den Vertikaltransport auch Kettenförderer bekannt, bei denen eine Rollenkette geführt nach oben läuft. Kettenbolzen der Rollenkette sind verlängert und reichen in einen Förderquerschnitt hinein, in welchem Förderquerschnitt ein oder mehrere Flaschenverschlüsse zwischen den vorstehenden Kettenbolzen Platz finden und durch die vorstehenden Kettenbolzen formschlüssig nach oben befördert werden. Problematisch ist das Eintakten der Verschlüsse zwischen die vorstehenden Kettenbolzen. Hier kommt es immer wieder zu Verhakung, nicht zuletzt durch bereits im Anlieferzustand beschädigte oder unvollständig gefertigte Verschlüsse. In Folge der Starrheit der Kettenbolzen können nur die Flaschenverschlüsse nachgeben und werden somit beschädigt.

Weiters sind aus anderen Bereichen der Fördertechnik kraftschlüssig arbeitende Förderer bekannt, z.B. so genannte Klemmbacken-Förderer. Das Fördergut wird von Klemmelementen bzw. Klemmbacken geklemmt und nach oben befördert. Empfindliche Kleinteile, wie z.B. Flaschenverschlüsse können so jedoch nicht zerstörungsfrei befördert werden, da sie dem beidseitigen Klemmdruck der Klemmbacken nicht standhalten und sich verformen. Dies gilt umso mehr als Flaschenverschlüsse aufgrund von Materialeinsparungsmaßnahmen ständig dünner und dadurch labiler werden.

Aus der JP 2000159321 A sowie der EP 2586715 A1 sind Vorrichtungen bekannt, die im Wesentlichen dem Oberbegriff des unabhängigen Anspruchs 1 entsprechen.

### AUFGABE DER ERFINDUNG

Der Erfindung liegt daher die Aufgabe zugrunde, Mittel zur Förderung von Kleinteilen, insbesondere von Flaschenverschlüssen, zur Verfügung zu stellen, die die oben genannten Nachteile vermeiden und eine Förderung der Kleinteile auch über steile Steigungen ohne Beschädigung der Kleinteile ermöglichen.

### DARSTELLUNG DER ERFINDUNG

Das erfindungsgemäße Fördermittel löst die oben genannte Aufgabe, indem primär eine formschlüssige Förderung der Kleinteile gewährleistet ist. Bei den Kleinteilen kann es sich beispielsweise um Behälterverschlüsse - z.B. um Verschlüsse von Marmelade- oder Gurkengläsern - handeln, insbesondere um Flaschenverschlüsse.

Hierzu weist das Fördermittel abstehende Mitnehmerelemente auf, die an den Kleinteilen formschlüssig angreifen. Ein primär kraftschlüssiges Angreifen der Fördermittel an den Kleinteilen findet also nicht statt, wodurch eine Beschädigung der Kleinteile bei deren Förderung vermieden wird.

Um weiters zu vermeiden, dass es in einer Blockadesituation zu einer Beschädigung der Kleinteile durch die Mitnehmerelemente, z.B. durch Quetschung, kommt, ist es erfindungsgemäß vorgesehen, ein Nachgeben bzw. Umbiegen der Mitnehmerelemente zu ermöglichen, sodass die Kleinteile nicht weitergefördert werden, sondern durchrutschen. Dies wird erreicht, indem das Fördermittel als Förderriemen mit einem Riemenkörper ausgelegt wird, wobei die Mitnehmerelemente mit dem Riemenkörper verbunden sind und von diesem abstehen. Dem Riemenkörper ist - wie jedem Riemen - inhärent eine gewisse Flexibilität bzw. Elastizität eigen. Dies bewirkt, dass die Mitnehmerelemente, auch wenn sie selbst relativ steif bzw. starr sind, gegenüber ihrer normalen Anordnung am Riemenkörper über einen gewissen Bereich, der im Folgenden als Verformungsweg bezeichnet wird, ausgelenkt werden können.

Daher ist erfindungsgemäß ein Förderabschnitt mit zwei Förderriemen zur Förderung von Kleinteilen, insbesondere von Flaschenverschlüssen, vorgesehen, wobei die Förderriemen jeweils einen Riemenkörper umfasst, welcher Riemenkörper senkrecht auf seine Längsachse eine zumindest abschnittsweise eckige Querschnittsfläche aufweist, wobei der Riemenkörper eine Förderseite umfasst, wobei die Querschnittsfläche zumindest abschnittsweise von der Förderseite begrenzt ist und wobei von der Förderseite Mitnehmerelemente abstehen.

Der Riemenkörper weist vorzugsweise eine Laufseite auf. Die Laufseite dient zum Antrieb des Förderriemens. Generell verbessert die Trennung von Förderseite und Laufseite die Möglichkeiten, den Förderriemen anzutreiben. Beispielsweise kann die Laufseite so ausgelegt werden, dass eine erhöhte Reibung zwischen der Laufseite und Antriebsmitteln gegeben ist. Oder der Riemenkörper weist auf der Laufseite eine Zahnung auf, sodass der Förderriemen über ein Zahnrad angetrieben werden kann. Grundsätzlich wären aber natürlich auch Ausführungsformen denkbar, bei denen Förderseite und Laufseite identisch sind. In einer besonders bevorzugten Ausführungsform ist die Laufseite gegenüber der Förderseite angeordnet. Es sind jedoch auch Ausführungsformen denkbar, bei welchen die Laufseite beispielsweise an die Förderseite anschließt, z.B. in einem rechten Winkel.

Der zumindest abschnittsweise eckig ausgeführte Querschnitt des Riemenkörpers ermöglicht eine exakte Führung des Riemenkörpers, die eine gleichbleibende, vorgegebene Orientierung der Mitnehmerelemente garantiert. D.h. ein ungewolltes Drehen des Riemenkörpers und damit der Mitnehmerelemente um die Längsachse des Riemenkörpers kann somit ausgeschlossen werden. Dies wiederum ermöglicht einen kontrollierten Formschluss zwischen Mitnehmerelementen und Kleinteilen, was eine zuverlässige Förderung der Kleinteile garantiert.

Um Kleinteile, die im Lebensmittelbereich zum Einsatz kommen, wie z.B. Flaschenverschlüsse, fördern zu können, müssen entsprechend hohe Anforderungen an die Hygiene erfüllt werden. Um diese Anforderungen erfüllen zu können, muss der Einsatz von Borsten bzw. Bürsten vermieden werden. Einerseits neigen Borsten dazu irgendwann abzubrechen, sodass höchste Gefahr bestünde, dass abgebrochene Borsten mit den Kleinteilen bzw. Flaschenverschlüssen in die Lebensmittel kommen. Andererseits sind Bürsten durch die Vielzahl an Borsten und Zwischenräumen eine ideale Brutstätte für Keime und daher absolut unhygienisch. Daher ist es bei einer bevorzugten Ausführungsform des erfindungsgemäßen Förderriemens vorgesehen, dass die Mitnehmerelemente borstenfrei ausgeführt sind.

Insbesondere bei der Verwendung von sehr langen Förderriemen können mitunter hohe Zugkräfte auftreten. Um einerseits den Riemenkörper stark genug für hohe Zugkräfte auszuführen und andererseits die Flexibilität bzw. Elastizität des Riemenkörpers nicht einzuschränken, ist es bei einer bevorzugten Ausführungsform vorgesehen, dass der Riemenkörper eine zugverstärkende Seele, vorzugsweise in Form einer Aramidfaser, aufweist.

Um einen besonders flexiblen bzw. elastischen Riemenkörper zu erhalten, ist es bei einer bevorzugten Ausführungsform vorgesehen, dass der Riemenkörper aus Polyurethan gefertigt ist.

Um den Förderriemen besonders genau führen zu können, ist es bei einer bevorzugten Ausführungsform vorgesehen, dass die Querschnittsfläche des Riemenkörpers rechteckig, vorzugsweise quadratisch ist. Der rechteckige bzw. quadratische Querschnitt weist eine Breite und eine Höhe auf. Breite und Höhe sind im Falle eines quadratischen Querschnitts natürlich gleich groß, wobei bei der Beförderung von Flaschenverschlüssen Breite und Höhe typischerweise 8 mm betragen können.

Wie oben beschrieben, wird in einer Blockadesituation durch das Nachgeben der Mitnehmerelemente ein Durchrutschen der Kleinteile ermöglicht, wodurch eine Beschädigung der Kleinteile vermieden wird. Das Nachgeben der Mitnehmerelemente kann optimiert werden, indem die Mitnehmerelemente selbst elastisch bzw. flexibel ausgeführt werden. Die Elastizität der Mitnehmerelemente kann dabei gegebenenfalls auf die zu fördernden Kleinteile abgestimmt werden. Die Abstimmung der Elastizität kann beispielsweise durch Wahl der Shore-Härte der Mitnehmerelemente erfolgen. Dabei können die Mitnehmerelemente insbesondere so weich bzw. hart wie der Riemenkörper oder weicher ausgeführt werden, um ein besonders einfaches Durchrutschen der Kleinteile in einer Blockadesituation zu ermöglichen. Daher ist es bei einer bevorzugten Ausführungsform vorgesehen, dass die Mitnehmerelemente eine Shore-Härte kleiner gleich der Shore-Härte des Riemenkörpers aufweisen, wobei vorzugsweise die Shore-Härte der Mitnehmerelemente 80 Shore beträgt und die Shore-Härte des Riemenkörpers 90 Shore. Unterschiedliche Materialien des Riemenkörpers und der mit dem Riemenkörper befestigten Mitnehmerelemente machen das Abschätzen des konkret zu erwartenden Elastizitätsverhaltens mitunter schwer. Um das Elastizitätsverhalten der mit dem Riemenkörper verbundenen Mitnehmerelemente besonders einfach abschätzen zu können, ist es bei einer besonders bevorzugten Ausführungsform vorgesehen, dass die Mitnehmerelemente aus demselben Material wie der Riemenkörper gefertigt sind. Aus ökonomischen Gründen ist es sinnvoll, die Mitnehmerelemente als separate Teile auszuführen, die am Riemenkörper befestigt werden. Die Befestigung kann auf eine Art alleine oder mit zusätzlichen Befestigungsmethoden erfolgen. Entsprechend ist es bei einer bevorzugten Ausführungsform vorgesehen, dass die Mitnehmerelemente zumindest durch Vulkanisieren, Schweißen, Kleben oder mechanisch am Riemenkörper befestigt sind. Eine mechanische Befestigung kann z.B. durch das Vorsehen von Bohrungen im Riemenkörper ermöglicht werden, in welche die Mitnehmerelemente gesteckt bzw. geklemmt werden. In diesem Fall würde sich für eine besonders stabile Fixierung zusätzlich eine Klebung der Mitnehmerelemente in der Bohrung anbieten.

Dementsprechend ist ein runder Querschnitt der Mitnehmerelemente bei einer mechanischen Befestigung von Vorteil. Darüberhinaus sind Rundschnüre, die auch als Rundriemen bekannt sind, in der Fördertechnik verbreitete Elemente, die in vielen - auch sehr kleinen - Dimensionen erhältlich sind. Entsprechend ist es bei einer bevorzugten Ausführungsform vorgesehen, dass die Mitnehmerelemente einen runden Querschnitt aufweisen und vorzugsweise als Rundschnüre ausgeführt sind. Der runde Querschnitt steht dabei senkrecht auf eine Längsachse der Mitnehmerelemente.

Grundsätzlich sind aber natürlich auch andere Geometrien der Mitnehmerelemente denkbar. Beispielsweise können die Mitnehmerelemente auch flächige Elemente sein, wie z.B. Lappen mit rechteckigem Querschnitt.

Um insbesondere bei der Beförderung von Flaschenverschlüssen optimale Elastizitätseigenschaften der aus Rundschnüren bestehenden Mitnehmerelemente zu erzielen, ist es bei einer besonders bevorzugten Ausführungsform vorgesehen, dass der runde Querschnitt der Mitnehmerelemente einen Durchmesser von 2 mm bis 6 mm, vorzugsweise von 2,7 mm bis 3,3 mm, besonders bevorzugt von 3 mm aufweist. Eine typische Länge der Mitnehmerelemente würde in diesem Fall zwischen 15 mm und 25 mm, vorzugsweise 20 mm betragen.

In dem erfindungsgemäßen Anwendungsfall sind die Kleinteile bei deren Förderung zwischen zwei Förderriemen bzw. zwischen den Förderseiten der Riemenkörper dieser Förderriemen angeordnet. Erfindungsgemäss stehen die Mitnehmerelemente nicht senkrecht ab, sondern unter einem größeren Winkel als 90° schräg von der jeweiligen Förderseite. Dies bewirkt, dass sich die Kleinteile bei deren Förderung durch die Schwerkraft bzw. durch den sich aufgrund von Reibung ergebenden Transportwiderstand zwischen den gegenüberliegenden schrägen Mitnehmerelementen mittig zentrieren. Dieser Zentrierungseffekt wird verstärkt, wenn die Kleinteile im Querschnitt kreisrund oder rotationssymmetrisch sind. Beste Ergebnisse werden erzielt, wenn der Winkel zwischen 100° und 130°, vorzugsweise 120° beträgt. Daher ist es bei der Erfindung vorgesehen, dass die Mitnehmerelemente jeweils eine Längsachse aufweisen, die mit der Längsachse des Riemenkörpers einen Winkel von 100° bis 130°, vorzugsweise von 120° einschließt.

Wenn die Mitnehmerelemente in diesem Fall mit einem auf ihre Längsachse normal stehenden, kreisförmigen Querschnitt ausgeführt sind, wie dies z.B. bei Rundschnüren der Fall sein kann, so ergibt es sich automatisch aufgrund der schrägen Anordnung, dass die Mitnehmerelemente die Förderseite mit einer im Wesentlichen elliptischen Fläche kontaktieren können, die parallel zur Längsachse des Riemenkörpers eine größte Ausdehnung aufweist. Dies ist für eine stabile Verbindung zwischen den Mitnehmerelementen und dem Riemenkörper vorteilhaft, weil beim Einsatz des Förderriemens zur Förderung von Kleinteilen auf die Mitnehmerelemente Kräfte wirken, die in Richtung parallel zur Längsachse des Riemenkörpers besonders groß sind. Um unabhängig von der Ausrichtung der Längsachse der Mitnehmerelemente zur Längsachse des Riemenkörpers die Möglichkeit für eine solche stabile Verbindung zu schaffen, ist es bei einer bevorzugten Ausführungsform vorgesehen, dass die Mitnehmerelemente in einer Schnittebene, die durch eine Richtung parallel zur Längsachse des Riemenkörpers und eine Normalrichtung aufgespannt wird, zumindest in einem an die Förderseite anschließenden Bereich einen Querschnitt aufweisen, welcher eine größere Erstreckung parallel zur Längsachse aufweist als parallel zur Normalrichtung, wobei die Normalrichtung normal auf die Längsachse des Riemenkörpers und normal auf eine Längsachse der Mitnehmerelemente steht. Diese Auslegung der Mitnehmerelemente ist unabhängig von der konkreten Form des Querschnitts normal auf die Längsachse der Mitnehmerelemente, d.h. die bevorzugte Ausführungsform betrifft sowohl runde als auch zumindest abschnittsweise eckige Querschnitte.

Bei dem erfindungsgemäßen Förderabschnitt ist es vorgesehen, dass zwei Förderriemen vorgesehen sind, dass in einem Betriebszustand des Förderabschnitts jeder Förderriemen ein in einer Förderrichtung laufendes Trum und ein rücklaufendes Trum aufweist, dass die in Förderrichtung laufenden Trümer einander gegenüberliegend angeordnet sind und einen Förderspalt zur Aufnahme der zu befördernden Kleinteile zumindest abschnittsweise begrenzen, wobei die Förderseiten der in Förderrichtung laufenden Trümer zueinander weisen, und dass die in Förderrichtung laufenden Trümer über einer Förderoberfläche angeordnet sind, welche Förderoberfläche den Förderspalt in einer ersten Querrichtung begrenzt. Im Betriebszustand können somit Kleinteile im Förderspalt des Förderabschnitts befördert werden, wobei die Kleinteile auf der Förderoberfläche gleiten können. Die Höhe der Riemenkörper der in Förderrichtung laufenden Trümer ist parallel zur ersten Querrichtung.

Bei dieser Anordnung ist es wichtig, die Synchronisation der beiden Förderriemen zueinander zu kontrollieren und gegebenenfalls wiederherzustellen. Beispielsweise können Schlupf oder Unvollkommenheiten bei der Montage dazu führen, dass die Mitnehmerelemente auf den gegenüberliegenden, in Förderrichtung laufenden Trümern in Förderrichtung zueinander in ungewünschter Weise versetzt sind oder dass sich die beiden Förderriemen mit unterschiedlicher Geschwindigkeit bewegen. Daher ist es bei einer bevorzugten Ausführungsform des erfindungsgemäßen Förderabschnitts vorgesehen, dass Sensoren vorgesehen sind, um die Position und/oder die Geschwindigkeit der Mitnehmerelemente des einen in Förderrichtung laufenden Trums relativ zur Position und/oder Geschwindigkeit der Mitnehmerelemente des anderen in Förderrichtung laufenden Trums zu überwachen, wobei die Mitnehmerelemente der in Förderrichtung laufenden Trümer vorzugsweise zwischen den Sensoren und der Förderoberfläche angeordnet sind. Bei den Sensoren handelt es sich vorzugsweise um optische Sensoren. Deren Signale werden von einer Regellogik verarbeitet, die die Antriebe der Förderriemen entsprechend regelt, um einen synchronen Lauf der Förderriemen zu garantieren bzw. wiederherzustellen. Eine entsprechende Beschleunigung bzw. Abbremsung der Antriebe kann beispielsweise über eine Frequenzregelung der Antriebe geschehen.

Die Längsachse der in Förderrichtung laufenden Trümer ist parallel zur Förderrichtung angeordnet. Um, wie oben geschildert, eine Zentrierung der beförderten Kleinteile im Förderspalt zu erreichen, ist es bei dem erfindungsgemäßen Förderabschnitt vorgesehen, dass die Längsachse der Mitnehmerelemente der in Förderrichtung laufenden Trümer mit der Förderrichtung einen Winkel von 100° bis 130°, vorzugsweise von 120° einschließt. D.h. die Mitnehmerelemente sind zur Förderrichtung schräg nachschleifend angeordnet.

Insbesondere dann, wenn ein Förderabschnitt mit nur einem Förderriemen vorgesehen ist, kann es aber auch sinnvoll sein, die Mitnehmerelemente zur Förderrichtung schräg vorwärts anzuordnen. Auch in diesem Fall schließt die Längsachse der Mitnehmerelemente mit der Förderrichtung einen Winkel von 100° bis 130°, vorzugsweise von 120° ein. Die Kleinteile rutschen in diesem Fall - aufgrund der Schwerkraft bzw. des Transportwiderstands - bei deren Beförderung in Richtung der Förderseite des Riemenkörpers.

Wenn die Mitnehmerelemente in diesem Fall mit einem auf ihre Längsachse normal stehenden, kreisförmigen Querschnitt ausgeführt sind, wie dies z.B. bei Rundschnüren der Fall sein kann, so ergibt es sich automatisch aufgrund der schrägen Anordnung, dass die Mitnehmerelemente die Förderseite des jeweiligen Riemenkörpers bzw. Förderriemens mit einer im Wesentlichen elliptischen Fläche kontaktieren können, die parallel zur Förderrichtung eine größte Ausdehnung aufweist. Dies ist für eine stabile Verbindung zwischen den Mitnehmerelementen und dem jeweiligen Riemenkörper vorteilhaft, weil bei der Förderung von Kleinteilen auf die Mitnehmerelemente Kräfte wirken, die parallel zur Förderrichtung besonders groß sind. Um unabhängig von der Ausrichtung der Längsachse der Mitnehmerelemente zur Förderrichtung die Möglichkeit für eine solche stabile Verbindung zu schaffen, ist es bei einer bevorzugten Ausführungsform des erfindungsgemäßen Förderabschnitts vorgesehen, dass die Mitnehmerelemente in einer Schnittebene, die parallel zur Förderrichtung und parallel zur ersten Querrichtung ist, zumindest in einem an die Förderseite des jeweiligen Riemenkörpers anschließenden Bereich einen Querschnitt aufweisen, welcher eine größere Erstreckung parallel zur Förderrichtung aufweist als parallel zur ersten Querrichtung. Diese Auslegung der Mitnehmerelemente ist unabhängig von der konkreten Form des Querschnitts normal auf die Längsachse der Mitnehmerelemente, d.h. die bevorzugte Ausführungsform betrifft sowohl runde als auch zumindest abschnittsweise eckige Querschnitte.

Zur Erzielung einer perfekten Zentrierung der Kleinteile im Förderspalt, zwischen den in Förderrichtung laufenden Trümern ist es von Vorteil, wenn die Mitnehmerelemente dieser Trümer genau gegenüber angeordnet sind. Es sind jedoch Situationen denkbar, wo eine Abweichung von der zentralen Lage der Kleinteile wünschenswert ist. Um eine solche nicht-zentrale Lage der Kleinteile zu realisieren, ist es bei einer besonders bevorzugten Ausführungsform des erfindungsgemäßen Förderabschnitts vorgesehen, dass die Mitnehmerelemente des einen in Förderrichtung laufenden Trums zu den Mitnehmerelementen des anderen in Förderrichtung laufenden Trums einen in Förderrichtung gemessenen Abstand größer null aufweisen. D.h. die Mitnehmerelemente der beiden in Förderrichtung laufenden Trümer sind in Förderrichtung versetzt zueinander angeordnet.

Insbesondere wenn der erfindungsgemäße Förderabschnitt zur Förderung über steile Steigungen verwendet wird, ist darauf zu achten, dass die Kleinteile nicht parallel zur ersten Querrichtung, von der Förderoberfläche weg aus dem Förderspalt fallen können. Daher ist es bei einer bevorzugten Ausführungsform des erfindungsgemäßen Förderabschnitts vorgesehen, dass eine Oberführung vorgesehen ist, die der Förderoberfläche gegenüberliegend angeordnet ist und den Förderspalt ebenfalls in der ersten Querrichtung begrenzt. Doch auch in flachen Förderabschnitten ist eine Oberführung vorteilhaft, beispielsweise um auszuschließen, dass es in einem Aufnahme- oder Abgabebereich des Förderabschnitts zu einem Übereinanderschieben von Kleinteilen kommt.

Um die Förderung der Kleinteile über steile Steigungen zu ermöglichen, ist es bei einer bevorzugten Ausführungsform des erfindungsgemäßen Förderabschnitts vorgesehen, dass der Förderabschnitt einen Steilförderabschnitt aufweist, in welchem die Förderoberfläche mit der Horizontalen einen Winkel von mindestens 30°, vorzugsweise mindestens 80°, besonders bevorzugt im Wesentlichen 90° einschließt.

Im Steilförderabschnitt ist es besonders wichtig, die in Förderrichtung laufenden Trümer exakt zu führen, sodass der Formschluss zwischen Mitnehmerelementen und Kleinteilen stets garantiert ist. Daher ist es bei einer bevorzugten Ausführungsform des erfindungsgemäßen Förderabschnitts vorgesehen, dass die in Förderrichtung laufenden Trümer im Steilförderabschnitt in Profilführungen geführt sind.

Es sei bemerkt, dass sich eine besonders einfach herzustellende Ausführungsform des erfindungsgemäßen Förderabschnitts ergibt, indem die rücklaufenden Trümer im Steilförderabschnitt ebenfalls in Profilführungen geführt sind. Zwar wäre auch die Führung mittels Führungsrollen denkbar, der dafür notwendige Aufwand ist jedoch etwas höher, da beispielsweise Achsen für die Führungsrollen vorgesehen werden müssen.

Selbstverständlich sind erfindungsgemäße Förderabschnitte mit Steilförderabschnitt und Flachförderabschnitten denkbar. Daher ist es bei einer bevorzugten Ausführungsform des erfindungsgemäßen Förderabschnitts vorgesehen, dass in Förderrichtung gesehen vor dem Steilförderabschnitt ein erster Flachförderabschnitt angeordnet ist und nach dem Steilförderabschnitt ein zweiter Flachförderabschnitt, wobei die Förderoberfläche im ersten Flachförderabschnitt und im zweiten Flachförderabschnitt im Wesentlichen parallel zur Horizontalen verläuft.

Auch in diesem Fall ergibt sich eine besonders einfach herzustellende Ausführungsform des erfindungsgemäßen Förderabschnitts, indem die in Förderrichtung laufenden Trümer im ersten Flachförderabschnitt und im zweiten Flachförderabschnitt in Profilführungen geführt sind.

Um einen kontinuierlichen Übergang zwischen den Flachförderabschnitten und dem Steilförderabschnitt zu ermöglichen, ist es bei einer bevorzugten Ausführungsform des erfindungsgemäßen Förderabschnitts vorgesehen, dass zwischen dem ersten Flachförderabschnitt und dem Steilförderabschnitt ein erster Übergangsabschnitt angeordnet ist, in welchem die Förderoberfläche zumindest abschnittsweise eine negative Krümmung aufweist, und dass zwischen dem Steilförderabschnitt und dem zweiten Flachförderabschnitt ein zweiter Übergangsabschnitt angeordnet ist, in welchem die Förderoberfläche zumindest abschnittsweise eine positive Krümmung aufweist. Dies hat den Vorteil, dass auch in den Übergangsabschnitten die Förderung mit denselben Förderriemen wie in den Flachförderabschnitten und dem Steilförderabschnitt erfolgen kann.

Eine Führung der in Förderrichtung laufenden Trümer im zweiten Übergangsabschnitt mittels Führungsrollen würde eine Anordnung der Führungsrollen zwischen Förderoberfläche und den Riemenkörpern der Trümer verlangen, wenn die Förderoberfläche so groß ist, dass der Abstand der in Förderrichtung laufenden Trümer zueinander auf unterschiedlich große Kleinteile angepasst werden kann. Entsprechend könnten die Führungsrollen nicht neben, sondern nur über der Förderoberfläche angeordnet werden. Dies hätte jedoch zur Folge, dass der Abstand der in Förderrichtung laufenden Trümer bzw. der auf diesen angeordneten Mitnehmerelemente von der Förderoberfläche relativ groß werden würde, sodass nur Kleinteile mit entsprechend großer Höhe befördert werden könnten. Um auch Kleinteile geringer Höhe befördern zu können und daher den Abstand zwischen den in Förderrichtung laufenden Trümern bzw. der auf diesen angeordneten Mitnehmerelemente von der Förderoberfläche nicht zu groß werden zu lassen, ist es bei einer bevorzugten Ausführungsform des erfindungsgemäßen Förderabschnitts vorgesehen, dass die in Förderrichtung laufenden Trümer im zweiten Übergangsabschnitt in Profilführungen geführt sind.

Wie bereits erwähnt, ermöglichen die Profilführungen eine sehr exakte Führung der Riemenkörper. Um eine Drehung der Riemenkörper und damit der mit den Riemenkörpern verbundenen Mitnehmerelemente um die Längsachse des jeweiligen Riemenkörpers gänzlich auszuschließen, ist es bei einer bevorzugten Ausführungsform des erfindungsgemäßen Förderabschnitts vorgesehen, dass die Profilführungen die Querschnittsfläche des Riemenkörpers jedes in Förderrichtung laufenden Trums bis auf dessen Förderseite vollumfänglich und dessen Förderseite abschnittsweise umschließen.

Um die Reibung zwischen Profilführung und Förderriemen bzw. Riemenkörper zu minimieren, ist es bei einer bevorzugten Ausführungsform des erfindungsgemäßen Förderabschnitts vorgesehen, dass die Profilführungen aus Kunststoff basierend auf ultrahochmolekularem Hart-Polyethylen bestehen. Typischerweise werden zu dieser Basis Zusätze zugegeben, die eine besonders geringe Reibung und eine minimale statische Aufladung bewirken sollen.

Grundsätzlich ist es wünschenswert, die Reibung zwischen den Förderriemen und ihren Führungen so weit wie möglich zu reduzieren, weshalb grundsätzlich Führungsrollen als Führungen vorteilhaft sind. Daher ist es bei einer bevorzugten Ausführungsform des erfindungsgemäßen Förderabschnitts vorgesehen, dass die rücklaufenden Trümer zumindest abschnittsweise mittels Führungsrollen geführt sind.

Im ersten Übergangsabschnitt kann durch den Einsatz von Führungsrollen zur Führung der in Förderrichtung laufenden Trümer die Reibung weiter reduziert werden. Dies ist mit relativ wenig Aufwand möglich, da lediglich auf den der Förderoberfläche gegenüberliegenden Seiten der Riemenkörper Führungsrollen vorgesehen sein müssen. Aufgrund der Krümmung im ersten Übergangsabschnitt wird der Riemenkörper der in Förderrichtung laufenden Trümer gegen diese Führungsrollen gedrückt. Auf Führungsrollen auf der der Förderoberfläche zugewandten Seite der Riemenkörper kann daher verzichtet werden, sodass es insbesondere nicht notwendig ist, Führungsrollen zwischen der Förderoberfläche und den in Förderrichtung laufenden Trümern vorzusehen. D.h. der Abstand zwischen den in Förderrichtung laufenden Trümern und der Förderoberfläche kann im ersten Übergangsabschnitt gering gehalten werden, auch wenn Führungsrollen zur Führung eingesetzt werden. Daher ist es bei einer besonders bevorzugten Ausführungsform des erfindungsgemäßen Förderabschnitts vorgesehen, dass die in Förderrichtung laufenden Trümer im ersten Übergangsabschnitt mittels Führungsrollen geführt sind.

Um die Anordnung der Förderriemen einstellen und damit unterschiedlich große bzw. hohe Kleinteile fördern zu können, ist es bei einer bevorzugten Ausführungsform des erfindungsgemäßen Förderabschnitts vorgesehen, dass die Förderoberfläche Teil eines, vorzugsweise als Metallprofil ausgeführten Grundkörpers ist, an welchem Grundkörper eine erste Wange und eine zweite Wange befestigt sind, wobei in einer zweiten Querrichtung gesehen die erste Wange vor dem Grundkörper angeordnet ist und die zweite Wange hinter dem Grundkörper, wobei die zweite Querrichtung normal auf die erste Querrichtung und auf die Förderrichtung steht, und dass die Position der ersten Wange am Grundkörper und die Position der zweiten Wange am Grundkörper parallel zur ersten Querrichtung verstellbar sind. D.h. die Position der ersten bzw. zweiten Wange ist in und gegen die erste Querrichtung verstellbar. Dabei ist die Breite der Riemenkörper der in Förderrichtung laufenden Trümer parallel zur zweiten Querrichtung. Wie im Folgenden ersichtlich wird, dient die Verstellbarkeit der Wangen entlang der ersten Querrichtung dazu, den Abstand der in Förderrichtung laufenden Trümer über der Förderoberfläche zu verstellen, um unterschiedlich hohe Kleinteile bzw. Flaschenverschlüsse mit den Mitnehmerelementen befördern zu können. Hierzu sind die Förderriemen besagter Trümer jeweils Teil einer Fördereinheit, die mit einer der beiden Wangen verbunden ist.

Um außerdem eine Anpassung des Förderspalts an unterschiedlich breite Kleinteile bzw. Flaschenverschlüsse zu ermöglichen, ist es bei einer bevorzugten Ausführungsform des erfindungsgemäßen Förderabschnitts vorgesehen, dass in der ersten Querrichtung gesehen in einem Anfangsbereich der ersten Wange ein erstes Positionierelement befestigt ist und in einem Anfangsbereich der zweiten Wange ein zweites Positionierelement, dass am ersten Positionierelement eine erste Fördereinheit befestigt ist und am zweiten Positionierelement eine zweite Fördereinheit, wobei die erste Fördereinheit und die zweite Fördereinheit jeweils einen der Förderriemen und dessen Führungen umfassen, und dass die Position der ersten Fördereinheit am ersten Positionierelement sowie die Position der zweiten Fördereinheit am zweiten Positionierelement parallel zur zweiten Querrichtung verstellbar sind.

D.h. jede Fördereinheit ist über ein Positionierelement mit einer Wange verbunden, wobei die Positioniermöglichkeit der Wangen parallel zur ersten Querrichtung auch die Positionierung der Fördereinheiten in der ersten Querrichtung - und damit die Anpassung der Anordnung der Förderriemen an unterschiedlich hohe Kleinteile - erlaubt. Die Positioniermöglichkeit der Positionierelemente entlang der zweiten Querrichtung ermöglicht wiederum die Positionierung der Fördereinheiten in der zweiten Querrichtung - und damit die Anpassung der Anordnung der Förderriemen an unterschiedlich breite Kleinteile bzw. an Flaschenverschlüsse mit unterschiedlich großen Durchmessern.

Eine besonders stabile Ausführungsform des erfindungsgemäßen Förderabschnitts ergibt sich, indem das erste Positionierelement und das zweite Positionierelement miteinander einstückig ausgeführt sind.

Um eine besonders kostengünstige Realisierung zu ermöglichen, ist es bei einer besonders bevorzugten Ausführungsform des erfindungsgemäßen Förderabschnitts vorgesehen, dass das erste Positionierelement und das zweite Positionierelement jeweils als Gewindespindel ausgeführt sind.

Um auch die Oberführung an unterschiedlich hohe Kleinteile anpassen und so eine einwandfreie Führung parallel zur ersten Querrichtung sicherstellen zu können, ist es bei einer bevorzugten Ausführungsform des erfindungsgemäßen Förderabschnitts vorgesehen, dass die Oberführung mittels einer Halterung am Grundkörper befestigt ist, wobei die Position der Oberführung parallel zur ersten Querrichtung, vorzugsweise an der Halterung, verstellbar ist.

Um die im Förderabschnitt bzw. Förderspalt befindlichen Kleinteile gegen Verschmutzung von außen, z.B. durch Staub, zu schützen und so höchstmögliche Hygieneanforderungen zu erfüllen, ist es bei einer bevorzugten Ausführungsform des erfindungsgemäßen Förderabschnitts vorgesehen, dass eine Abdeckung des Förderabschnitts vorgesehen ist, dass die Abdeckung erste Abdeckungsteile und mindestens einen zweiten Abdeckungsteil aufweist, dass die ersten Abdeckungsteile an der ersten Wange und/oder der zweiten Wange fixiert sind und dass der mindestens eine zweite Abdeckungsteil lösbar mit dem ersten Positionierelement und/oder dem zweiten Positionierelement verbunden ist. Die Fixierung an den Wangen bzw. die Verbindung mit den Positionierelementen bewirkt, dass auch die ersten Abdeckungsteile und der mindestens eine zweite Abdeckungsteil parallel zur ersten Querrichtung verschoben werden, wenn die Position der Wangen entlang der ersten Querrichtung geändert wird.

Um eine optische Kontrolle der im Förderabschnitt bzw. Förderspalt befindlichen Kleinteile zu ermöglichen, ist es bei einer bevorzugten Ausführungsform des erfindungsgemäßen Förderabschnitts vorgesehen, dass der mindestens eine zweite Abdeckungsteil transparent ausgeführt ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: einen Förderriemen in einer Schnittansicht
- Fig. 2: einen Förderriemen in einer Seitenansicht
- Fig. 3: eine vergrößerte Ansicht des Details Z aus Fig. 2
- Fig. 4: eine schematische Seitenansicht eines erfindungsgemäßen Förderabschnitts
- Fig. 5: eine Aufsicht auf eine Förderfläche eines erfindungsgemäßen Förderabschnitts in einem Betriebszustand
- Fig. 6: eine vergrößerte Darstellung einer Aufsicht analog zu Fig. 5, wobei Mitnehmerelemente der Förderriemen umgebogen sind
- Fig. 7: einen Teil eines Schnitts gemäß einer Schnittlinie A-A aus Fig. 4
- Fig. 8: einen Teil eines Schnitts gemäß einer Schnittlinie B-B aus Fig. 4
- Fig. 9: einen Teil eines Schnitts gemäß einer Schnittlinie C-C aus Fig. 4
- Fig. 10: eine Schnittansicht gemäß der Schnittlinie A-A aus Fig. 4
- Fig. 11: eine Aufsicht auf eine Förderfläche eines Förderabschnitts in einem Betriebszustand, wobei der Förderabschnitt nur einen Förderriemen aufweist
- Fig. 12: eine Aufsicht auf eine Förderfläche eines weiteren Förderabschnitts in einem Betriebszustand, wobei der Förderabschnitt nur einen Förderriemen aufweist

### WEGE ZUR AUSFÜHRUNG DER ERFINDUNG

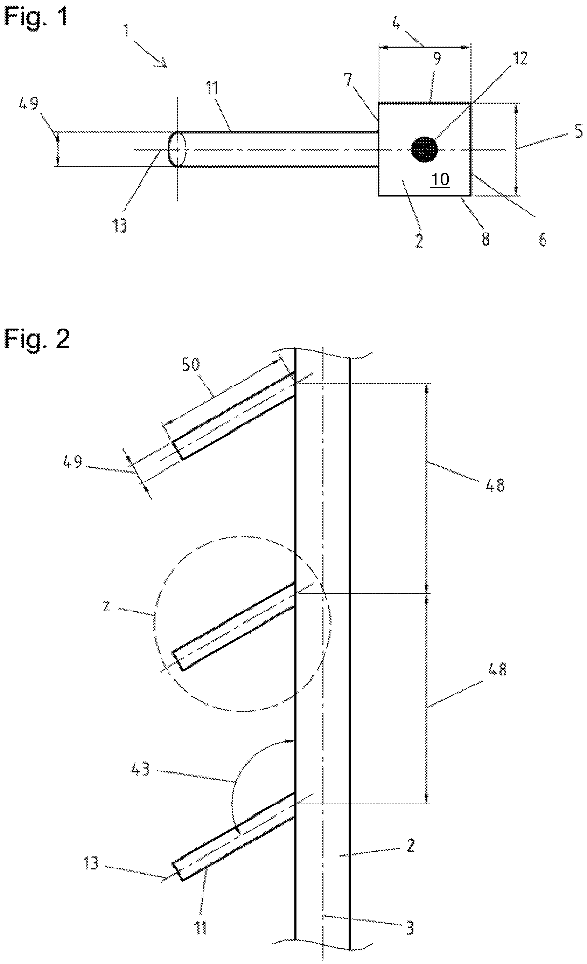

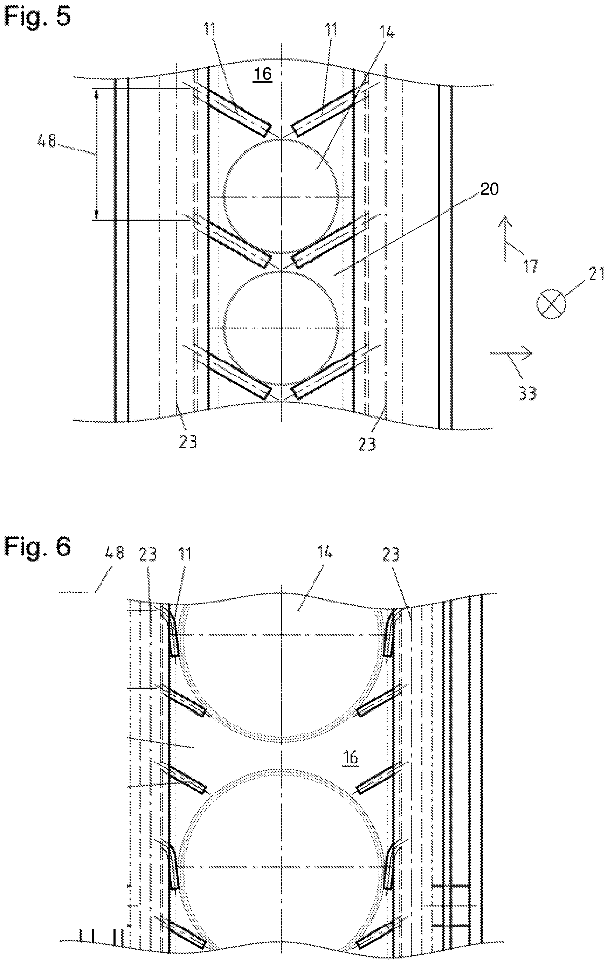

Fig. 1 zeigt einen Förderriemen 1 für einen erfindungsgemässen Förderabschnitt, zur Förderung von Kleinteilen, insbesondere von Flaschenverschlüssen 14 (vgl. z.B. Fig. 5), in einer Schnittansicht, in welcher ein Riemenkörper 2 mit einer quadratischen Querschnittsfläche 10 erkennbar ist.

Entsprechend sind eine Breite 4 und eine Höhe 5 des Riemenkörpers 2 gleich groß, typischerweise 8 mm. Grundsätzlich bewegen sich die Größen von Breite 4 und Höhe 5 im Hinblick auf eine hinreichend große Elastizität bzw. Flexibilität des Riemenkörpers 2 bevorzugt im Bereich zwischen 8 mm und 20 mm, wobei der Riemenkörper 2 typischerweise aus Polyurethan gefertigt ist. Natürlich sind jedoch auch andere Geometrien der Querschnittsfläche 10 möglich, beispielsweise eine rechteckige Querschnittsfläche 10 mit einer Breite 4 von 10 mm und einer Höhe 5 von 20 mm.

Zur Zugverstärkung des Riemenkörpers 2 weist der Riemenkörper 2 eine Seele auf, die beispielsweise als Aramidfaser 12 ausgeführt sein kann. Im Ausführungsbeispiel der Fig. 1 ist die Aramidfaser 12 in der Querschnittsfläche 10 mittig angeordnet.

Die Querschnittsfläche 10 steht normal auf eine Längsachse 3 (vgl. Fig. 2) des Riemenkörpers 2, wobei die Längsachse 3 in Fig. 1 normal auf die Zeichenebene steht (nicht dargestellt). Die Querschnittsfläche 10 wird im Ausführungsbeispiel der Fig. 1 begrenzt durch eine Frontseite 8, eine der Frontseite 8 gegenüberliegende Rückseite 9, eine Laufseite 6 und eine der Laufseite 6 gegenüberliegende Förderseite 7. Vornehmlich dient die Laufseite 6 zur Übertragung einer Antriebskraft auf den Förderriemen 1. Von der Förderseite 7 stehen Mitnehmerelemente 11 ab, die primär für eine formschlüssige Beförderung der Kleinteile vorgesehen sind.

Im gezeigten Ausführungsbeispiel sind die Mitnehmerelemente 11 als Rundschnüre aus Polyurethan ausgeführt und weisen dieselbe oder eine etwas geringere Shore-Härte als der Riemenkörper 2 auf. Typische Werte sind 80 Shore für die Mitnehmerelemente 11 und 90 Shore für den Riemenkörper 2. Die Mitnehmerelemente 11 weisen entsprechend einen runden Querschnitt auf, dessen Durchmesser 49 typischerweise kleiner ist als die Höhe 5 des Riemenkörpers 2 und beispielsweise 3 mm beträgt. Ein im Vergleich zur Höhe 5 kleinerer Durchmesser 49 erlaubt eine Führung des Riemenkörpers 2 auch auf dessen Förderseite 7, wie in weiterer Folge noch gezeigt werden wird.

Die Mitnehmerelemente 11 können am Riemenkörper 2 auf unterschiedlichste Weise befestigt sein, beispielsweise durch Vulkanisieren, Schweißen, Kleben oder mechanisch oder durch eine Kombination mehrerer dieser Methoden.

Die Mitnehmerelemente 11 weisen eine Längsachse 13 auf. In der Seitenansicht der Fig. 2 ist erkennbar, dass die Längsachse 13 mit der Längsachse 3 des Riemenkörpers 2 einen Winkel 43 einschließt, der größer als 90° ist. Erfindungsweise beträgt die Größe des Winkels 43 zwischen 100° und 130°, bevorzugt 120°. Die entlang der Längsachse 13 gemessene Länge 50 der Mitnehmerelemente 11 richtet sich so wie die Dimensionierung des Durchmessers 49, der Breite 4 und der Höhe 5 grundsätzlich nach dem Größenbereich, in welchem die zu fördernden Kleinteile liegen. Typische Kleinteile wie Behälterverschlüsse oder Flaschenverschlüsse 14 haben eine Höhe zwischen 5 mm und 60 mm sowie eine Breite bzw. einen Durchmesser zwischen 10 mm und 100 mm. Eine sich daraus ergebende typische Länge 50 beträgt 20 mm. Entsprechend dem Durchmesser der Kleinteile bzw. Flaschenverschlüsse 14 ist auch eine Beabstandung 48 der Mitnehmerelemente 11 entlang der Längsachse 3 des Riemenkörpers 2 gestaltet und beträgt beispielsweise 40 mm oder 45 mm um sicherzustellen, dass zwischen zwei entlang der Längsachse 3 angeordneten Mitnehmerelementen 11 genau ein Kleinteil bzw. Flaschenverschluss 14 Platz findet.

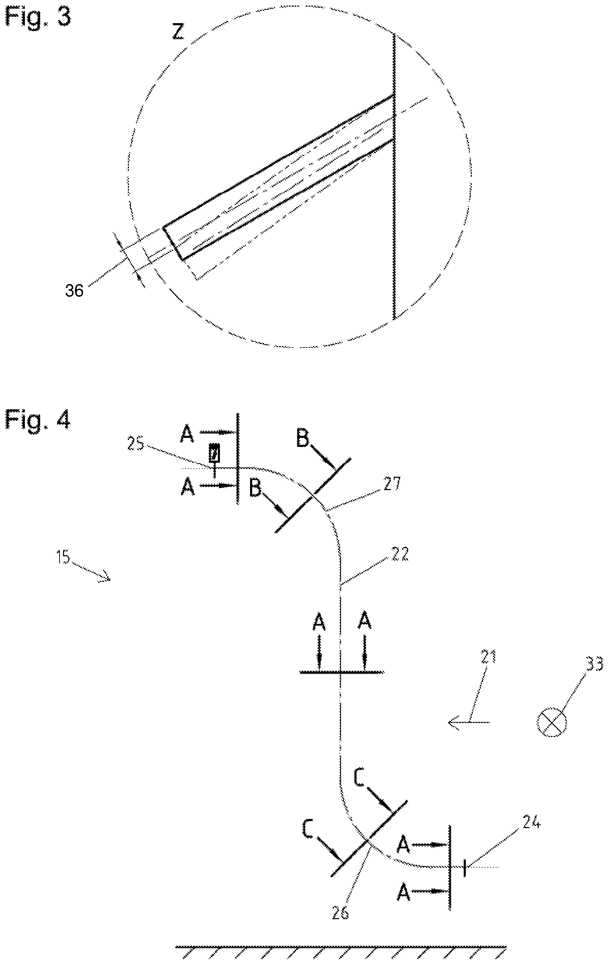

Aufgrund der Elastizität bzw. Flexibilität des Riemenkörpers 2 sind die Mitnehmerelemente 11 in ihrer räumlichen Anordnung relativ zum Riemenkörper 2 grundsätzlich nicht völlig starr. D.h. selbst dann wenn die Mitnehmerelemente 11 selbst nicht aus einem elastischen bzw. flexiblen Material gefertigt sind, können die Mitnehmerelemente 11, beispielsweise in einer Blockadesituation, etwas nachgeben, um ein Durchrutschen der Kleinteile zu ermöglichen und eine Beschädigung der Kleinteile zu vermeiden. Dieses Nachgeben wird in Fig. 3 veranschaulicht, die eine vergrößerte Darstellung des Details Z aus Fig. 2 zeigt. In Fig. 3 ist ein sehr geringer Verformungsweg 36 eingezeichnet, um den sich das Mitnehmerelement 11 aufgrund der Elastizität bzw. Flexibilität des Riemenkörpers 2 jedenfalls bewegen lässt. Der Verformungsweg 36 kann jedoch auch deutlich größer sein, als in Fig. 3 gezeigt, auch wenn das Mitnehmerelement 11 selbst relativ starr ist.

Der Förderriemen 1 eignet sich nicht nur für die Beförderung von Kleinteilen über flache Strecken, sondern insbesondere auch zur Beförderung von Kleinteilen über steile Strecken. Entsprechend weist ein in Fig. 4 schematisch dargestellter erfindungsgemäßer Förderabschnitt 15 einen Steilförderabschnitt 22 auf.

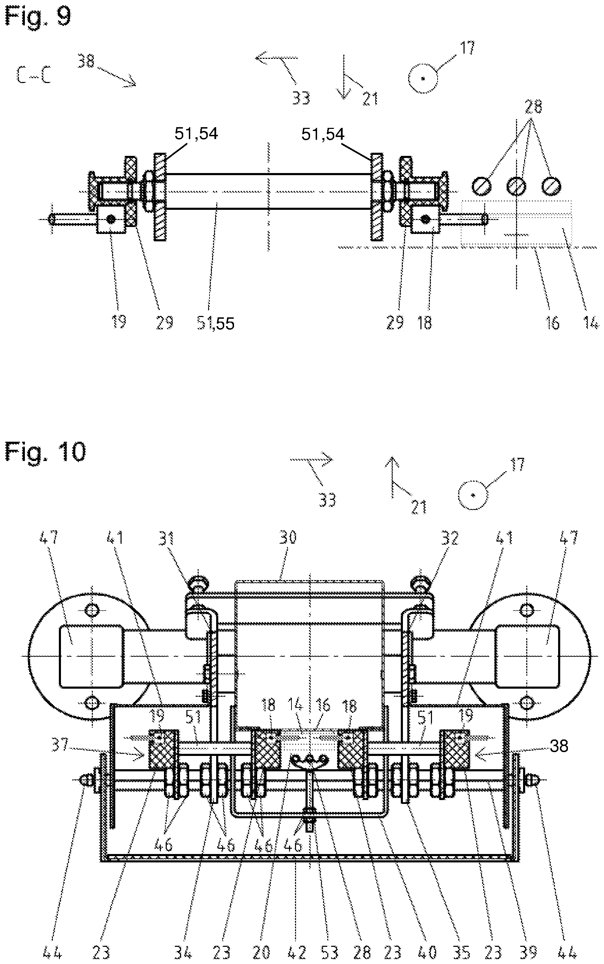

Im Förderabschnitt 15 sind zwei Förderriemen 1 vorgesehen, die in einem Betriebszustand des Förderabschnitts 15 in einer Förderrichtung 17 laufende Trümer 18 und rücklaufende Trümer 19 (vgl. z.B. Fig. 10) aufweisen. Die Trümer 18 sind einander gegenüberliegend angeordnet, wobei die Förderseiten 7 der Trümer 18 zueinander weisen und abschnittsweise einen Förderspalt 20 entlang einer zweiten Querrichtung 33 begrenzen. Die Trümer 18 sind weiters über einer Förderoberfläche 16 angeordnet, die den Förderspalt 20 in einer ersten Querrichtung 21 begrenzt. Förderrichtung 17, erste Querrichtung 21 und zweite Querrichtung 33 stehen wechselseitig normal aufeinander, wobei die Längsachse 3 der Riemenkörper 2 der Trümer 18 grundsätzlich parallel zur Förderrichtung 17 verläuft. Die Breite 4 der Riemenkörper 2 der Trümer 18 verläuft entlang der zweiten Querrichtung 33, die Höhe 5 der Riemenkörper 2 der Trümer 18 entlang der ersten Querrichtung 21.

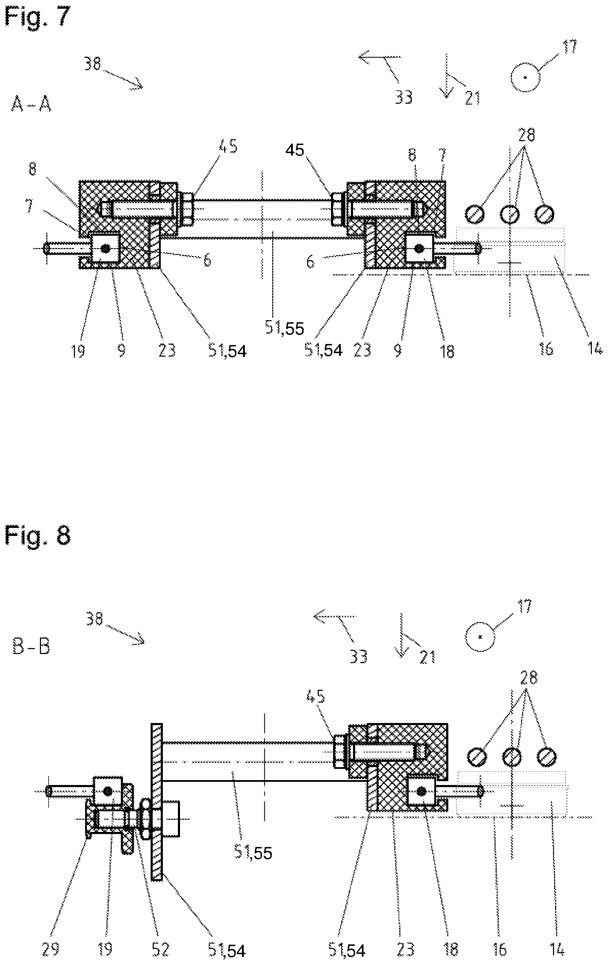

Der Förderspalt 20 dient zur Aufnahme der zu befördernden Kleinteile bzw. Flaschenverschlüsse 14 und wird entlang der ersten Querrichtung 21 vorzugsweise zusätzlich von einer Oberführung 28 begrenzt, sodass im Förderspalt 20 befindliche Kleinteile in keiner Richtung ungewollt aus dem Förderspalt 20 fallen können. Dabei kann die Oberführung 28 aus mehreren stabförmigen Elementen bestehen, vgl. z.B. Fig. 7.

Die Mitnehmerelemente 11 der beiden Trümer 18 weisen zueinander in den Förderspalt 20. Im Betriebszustand des Förderabschnitts 15 werden die Flaschenverschlüsse 14 mittels der Mitnehmerelemente 11 über der Förderoberfläche 16 entlang der Förderrichtung 17 befördert, wobei die Flaschenverschlüsse 14 auf der Förderoberfläche 16 abgleiten können. Die Mitnehmerelemente 11 sind dabei bezüglich der Förderrichtung 17 schräg nachschleifend angeordnet. Aufgrund der Reibung zwischen den Flaschenverschlüssen 14 und der Förderoberfläche 16 sowie aufgrund der Schwerkraft bewirkt diese Anordnung der Mitnehmerelemente 11 eine Zentrierung der Flaschenverschlüsse 14 im Förderspalt 20 bezüglich der zweiten Querrichtung 33.

Fig. 5 zeigt eine Aufsicht auf die Förderoberfläche 16 während des Betriebszustands des Förderabschnitts 15, wobei die genannte Zentrierung der Flaschenverschlüsse 14 illustriert wird. Die Riemenkörper 2 der Trümer 18 sind in Fig. 5 nicht sichtbar, da Fig. 5 einen Fall zeigt, wo die Riemenkörper 2 der Trümer 18 in Profilführungen 23 geführt sind.

Im Falle des in Fig. 5 gezeigten Beispiels ist die Beabstandung 48 der Mitnehmerelemente 11 entlang der Längsachse 3 der Riemenkörper 2 so gewählt, dass genau ein Flaschenverschluss 14 zwischen zwei aufeinanderfolgende Mitnehmerelemente 11 passt. Demgegenüber illustriert Fig. 6 einen Fall, wo die Beabstandung 48 kleiner als der Durchmesser der Flaschenverschlüsse 14 ist, sodass es stets zu einem Umbiegen von Mitnehmerelementen 11 kommt, auch wenn keine Blockadesituation vorliegt. In diesem Fall bewirken die umgebogenen Mitnehmerelemente 11 eine zusätzliche Klemmung der Flaschenverschlüsse 14, was erwünscht sein kann, wenn besonders präzise gefördert werden muss. Allerdings müssen hierfür die beförderten Flaschenverschlüsse 14 bzw. Kleinteile eine hinreichend große Stabilität aufweisen. Außerdem ist es für diese Ausführungsform von Vorteil, wenn die Mitnehmerelemente 11 selbst eine hohe Elastizität bzw. Flexibilität aufweisen. Dies gestattet auch die Förderung relativ großer, stabiler Kleinteile bzw. Behälterverschlüsse oder Flaschenverschlüsse 14 mit ein und demselben Förderriemen 1, der auch für die Beförderung deutlich kleinerer, empfindlicherer Kleinteile eingesetzt werden kann. Werden letztere nur von einem Paar von Mitnehmerelementen 11 im Wesentlichen formschlüssig befördert (vgl. Fig. 5), so werden die größeren Kleinteile von mehreren Paaren von Mitnehmerelementen 11 sowohl formschlüssig als auch kraftschlüssig befördert (vgl. Fig. 6).

Grundsätzlich ist die Steifigkeit der Mitnehmerelemente 11 an das Gewicht der zu transportierenden Kleinteile anzupassen.

Im Steilförderabschnitt 22 schließt die Förderoberfläche 16 mit der Horizontalen einen Winkel von mindestens 30°, vorzugsweise von mindestens 80°, besonders bevorzugt von im Wesentlichen 90° ein. Selbstverständlich kann der Förderabschnitt 15 aber nicht nur einen Steilförderabschnitt 22 aufweisen. Entsprechend sind in Fig. 4 ein erster Flachförderabschnitt 24 und ein zweiter Flachförderabschnitt 25 zu erkennen, wobei in Förderrichtung 17 gesehen der erste Flachförderabschnitt 24 vor dem Steilförderabschnitt 22 angeordnet ist und der zweite Flachförderabschnitt 25 nach dem Steilförderabschnitt 22. In den Flachförderabschnitten 24, 25 verläuft die Förderoberfläche 16 im Wesentlichen parallel zur Horizontalen.

Zwischen dem ersten Flachförderabschnitt 24 und dem Steilförderabschnitt 22 ist ein erster Übergangsabschnitt 26 angeordnet, in welchem die Förderoberfläche 16 zumindest abschnittsweise eine negative Krümmung aufweist, um einen stetigen Verlauf der Förderoberfläche 16 im gesamten Förderabschnitt 15 zu ermöglichen. Analog ist zwischen dem Steilförderabschnitt 22 und dem zweiten Flachförderabschnitt 25 ein zweiter Übergangsabschnitt 27 angeordnet, in welchem die Förderoberfläche 16 zumindest abschnittsweise eine positive Krümmung aufweist, um einen stetigen Verlauf der Förderoberfläche 16 im gesamten Förderabschnitt 15 zu ermöglichen.

Wie bereits erwähnt, können die in Förderrichtung 17 laufenden Trümer 18 mittels Profilführungen 23 geführt sein. Fig. 7 zeigt einen Ausschnitt eines Schnitts gemäß einer die Schnittebene andeutenden Schnittlinie A-A aus Fig. 4. Gemäß dem gezeigten Beispiel sind im Steilförderabschnitt 22, im ersten Flachförderabschnitt 24 und im zweiten Flachförderabschnitt 25 sowohl die in Förderrichtung 17 laufenden Trümer 18 als auch die rücklaufenden Trümer 19 mittels Profilführungen 23 geführt. Dabei umschließen die Profilführungen 23 die Frontseite 8, die Rückseite 9 und die Laufseite 6 der Trümer 18, 19 vollständig. Die Förderseite 7 der Trümer 18, 19 wird abschnittsweise von den Profilführungen 23 umschlossen. Einerseits gewährleistet dies eine optimal stabile Führung, andererseits wird Platz für die Mitnehmerelemente 11 gelassen. Um die Reibung der Trümer 18, 19 in den Profilführungen 23 so gering wie möglich zu halten, sind die Profilführungen 23 vorzugsweise aus einem Kunststoff basierend auf ultrahochmolekularem Hart-Polyethylen ausgeführt.

Die Profilführungen 23 samt den Trümern 18, 19 sind gemäß Fig. 7 zu einer zweiten Fördereinheit 38 zusammengefasst, wobei die Profilführungen 23 mittels eines Verbindungselements 51 und Schrauben 45 starr miteinander verbunden sind. Das Verbindungselement 51 kann hierzu Stege 54 umfassen, mit denen die Profilführungen 23 verschraubt sind. Die Stege 54 wiederum müssen nicht einstückig mit dem Verbindungselement 51 ausgeführt sein, sondern können in an sich bekannter Weise, beispielsweise durch Verschraubung, mit einem Hauptteil 55 des Verbindungselements 51 verbunden sein, um das Verbindungselement 51 auszubilden.

Die Schnittansicht der Fig. 8 zeigt eine zweite Fördereinheit 38, welche im Bereich des zweiten Übergangsabschnitts 27 angeordnet ist, vgl. Schnittlinie B-B aus Fig. 4. Im Unterschied zur zweiten Fördereinheit 38 aus Fig. 7 ist das rücklaufende Trum 19 in diesem Fall mittels Führungsrollen 29 geführt, um die bei der Führung des Riemenkörpers 2 auftretende Reibung zu minimieren. Das in Förderrichtung 17 laufende Trum 18 wird jedoch auch in einer Profilführung 23 geführt, um maximale Stabilität zu gewährleisten. In diesem Fall ist am Verbindungselement 51 bzw. an einem der Stege 54 einerseits die Profilführung 23 fixiert, andererseits sind am Verbindungselement 51 bzw. am anderen Steg 54 Achsen 52 für die Führungsrollen 29 befestigt.

Die Schnittansicht der Fig. 9 wiederum zeigt eine zweite Fördereinheit 38, welche im Bereich des ersten Übergangsabschnitts 26 angeordnet ist, vgl. Schnittlinie C-C aus Fig. 4. Im gezeigten Ausführungsbeispiel genügt im ersten Übergangsabschnitt 26 die Führung beider Trümer 18, 19 mittels Führungsrollen 29, sodass im ersten Übergangsabschnitt 26 nur eine minimale Reibung bei der Führung des Riemenkörpers 2 beider Trümer 18, 19 auftritt. In diesem Fall sind am Verbindungselement 51 lediglich die Achsen 52 für die Führungsrollen 29 befestigt und keine Profilführung 23. Die Achsen 52 können dabei einstückig mit dem Verbindungselement 51 bzw. dessen Hauptteil 55 ausgeführt sein, beispielsweise wenn das Verbindungselement 51 bzw. dessen Hauptteil 55 ein Drehteil ist.

Fig. 10 zeigt einen Schnitt durch den Steilförderabschnitt 22 gemäß der die Schnittebene andeutenden Schnittlinie A-A aus Fig. 4. Im Vergleich mit Fig. 7 sind die zweite Fördereinheit 38 und eine dazu spiegelsymmetrisch angeordnete erste Fördereinheit 37 etwas weniger detailreich dargestellt, da die Befestigung der Profilführungen 23 an den Verbindungselementen 51 bzw. den Stegen 54 mittels Schrauben 45 in Fig. 10 nicht erkennbar ist. Andererseits sind natürlich auch Fälle denkbar, bei welchen die Profilführungen 23 nicht mittels Schrauben 45, sondern z.B. durch Schweißen oder Kleben mit dem jeweiligen Verbindungselement 51 bzw. dem jeweiligen Steg 54 verbunden sind.

Fig. 10 zeigt einen Aufbau des Förderabschnitts 15 im Bereich des Steilförderabschnitts 22 mit einem, vorzugsweise als Metallprofil ausgeführten Grundkörper 30, wobei die Förderoberfläche 16 durch einen Abschnitt des Grundkörpers 30 ausgebildet wird. Der Grundkörper 30 erstreckt sich entlang der Förderrichtung 17, der ersten Querrichtung 21 und der zweiten Querrichtung 33. Zur Anordnung des Grundkörpers 30 an einer unterstützenden Fläche bzw. am Boden sind Standfüße 47 vorgesehen, die mit dem Grundkörper 30 in an sich bekannter Weise verbunden sind.

Am Grundkörper 30 sind eine erste Wange 31 und eine zweite Wange 32 befestigt, wobei in der zweiten Querrichtung 33 gesehen die erste Wange 31 vor dem Grundkörper 30 angeordnet ist und die zweite Wange 32 nach dem Grundkörper 30. Beide Wangen 31, 32 weisen jeweils ein Langloch (in Fig. 10 nicht erkennbar) auf. Mittels Schrauben 45, die durch das jeweilige Langloch geführt werden, werden die Wangen 31, 32 so am Grundkörper 30 befestigt, dass ihre Position entlang der ersten Querrichtung 21 veränderbar bzw. einstellbar ist. Um dabei die Position der Wangen 31, 32 entlang der ersten Querrichtung 21 sehr präzise einstellen zu können, sind Stellschrauben 56 vorgesehen, die mit einem Richtungsanteil parallel zur ersten Querrichtung 21 verstellt werden können und vorzugsweise mit dem Grundkörper 30 verbunden sind.

In einem Anfangsbereich 34 der ersten Wange 31 ist eine Gewindespindel 39 befestigt, die außerdem auch in einem Anfangsbereich 35 der zweiten Wange 32 befestigt ist. Die Gewindespindel 39 bildet im Anfangsbereich 34 ein erstes Positionierelement für die erste Fördereinheit 37 aus und im Anfangsbereich 35 ein zweites Positionierelement für die zweite Fördereinheit 38. Konkret sind die erste Fördereinheit 37 und die zweite Fördereinheit 38 mittels Muttern 46 an der Gewindespindel 39 befestigt. Durch Verstellen der Muttern 46 kann die Position der Fördereinheiten 37, 38 entlang der zweiten Querrichtung 33 verändert bzw. eingestellt werden. Auf diese Weise kann ein entlang der zweiten Querrichtung 33 gemessener Abstand der in Förderrichtung 17 laufenden Trümer 18 zueinander variiert werden, um Kleinteile bzw. Flaschenverschlüsse 14 mit unterschiedlicher Breite bzw. mit unterschiedlichem Durchmesser im Förderspalt 20 befördern zu können.

Indem nun die Position der Wangen 31, 32 entlang der ersten Querrichtung 21 verstellt wird, wird auch die Position der Fördereinheiten 37, 38 entlang der ersten Querrichtung 21 verstellt. Auf diese Weise kann ein entlang der ersten Querrichtung 21 gemessener Abstand zwischen den Trümern 18 und der Förderoberfläche 16 variiert werden, um Kleinteile bzw. Flaschenverschlüsse 14 mit unterschiedlicher Höhe im Förderspalt 20 befördern zu können. Mit anderen Worten kann die Position der Mitnehmerelemente 11 in Bezug auf die erste Querrichtung 21 und auf die zweite Querrichtung 33 so eingestellt werden, dass ein optimaler Formschluss zwischen den Mitnehmerelementen 11 und den zu befördernden Kleinteilen bzw. Flaschenverschlüssen 14 gewährleistet ist.

Hierbei ist es wichtig, auch die Oberführung 28 an unterschiedlich hohe Kleinteile anpassen zu können. Entsprechend ist eine mit dem Grundkörper 30 verbundene Halterung 40 für die Oberführung 28 vorgesehen. Die Oberführung 28 kann nun mit einem weiteren Verbindungselement, das im vorliegenden Ausführungsbeispiel als Gewindestange 53 ausgeführt ist, mit der Halterung 40 verbunden sein, um die Position der Oberführung 28 parallel zur ersten Querrichtung 21 an der Halterung 40 verstellen zu können. Im vorliegenden Ausführungsbeispiel erfolgt die Befestigung der Gewindestange 53 an der Halterung 40 mittels Muttern 46, sodass ein Verstellen der Position der Gewindestange 53 und damit der Oberführung 28 parallel zur ersten Querrichtung 21 möglich ist.

Schließlich sind erste Abdeckungsteile 41 und ein zweites Abdeckungsteil 42 vorgesehen, um die im Förderspalt 20 befindlichen Kleinteile gegen Verschmutzung von außen, z.B. durch Staub, zu schützen und so höchstmögliche Hygieneanforderungen zu erfüllen. Die ersten Abdeckungsteile 41 sind an den Wangen 31, 32 befestigt und damit ebenfalls in ihrer Position entlang der ersten Querrichtung 21 verstellbar. Der zweite Abdeckungsteil 42 ist mit unverlierbaren Schrauben 44 an den Enden der Gewindespindel 39 befestigt, womit auch der zweite Abdeckungsteil 42 in seiner Position entlang der ersten Querrichtung 21 verstellbar ist.

Durch Lockern der unverlierbaren Schrauben 44 kann der zweite Abdeckungsteil 42 abgenommen werden, beispielsweise wenn Wartungsaufgaben vom Benutzer auszuführen sind.

Der zweite Abdeckungsteil 42 kann außerdem transparent, beispielsweise aus Plexiglas ausgeführt sein, um während des Betriebszustands des Förderabschnitts 15 die Förderung der Kleinteile bzw. Flaschenverschlüsse 14 optisch inspizieren zu können.

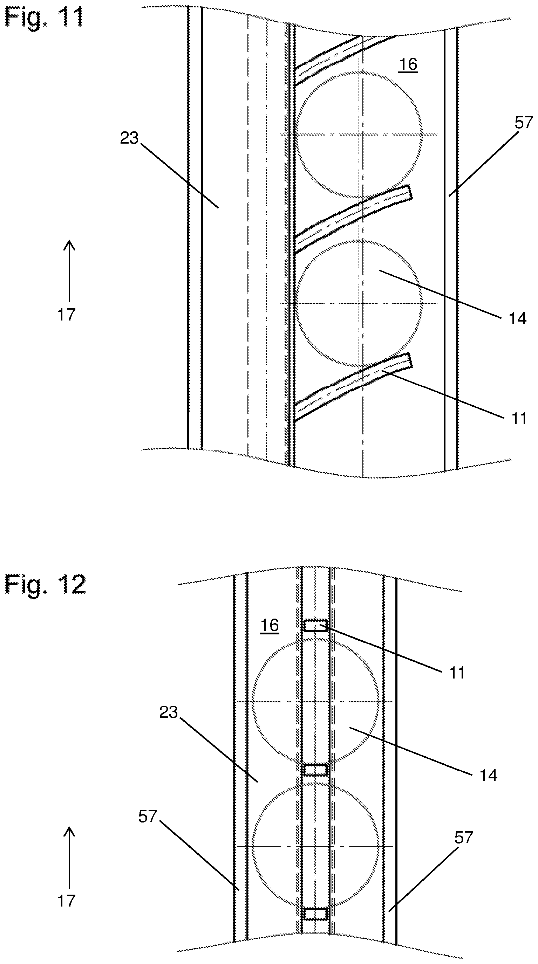

Fig. 11 zeigt eine Ausführungsform eines nicht beanspruchten Förderabschnitts 15 im Betriebszustand in einer Aufsicht auf die Förderoberfläche 16, wobei in diesem Fall nur ein Förderriemen 1 vorgesehen ist, dessen in Förderrichtung 17 laufendes Trum 18 in einer Profilführung 23 geführt ist. Der Aufbau dieses Förderabschnitts 15 ist grundsätzlich analog zu einer Hälfte der in Fig. 5 oder Fig. 10 gezeigten Ausführungsform. Entsprechend werden die Kleinteile bzw. Flaschenverschlüsse 14 nur von den Mitnehmerelementen 11 des einen Trums 18 befördert. Die Profilführung 23 bildet gleichzeitig eine Seitenführung für die Flaschenverschlüsse 14. Gegenüberliegend ist eine weitere Seitenführung 57 vorgesehen, auf welcher die Flaschenverschlüsse 14 abgleiten oder abrollen können. Dies kann einen ungewünscht hohen Verschleiß der Flaschenverschlüsse 14 verursachen. Um Kontakt und damit Reibung mit der Seitenführung 57 zu vermeiden, sind die Mitnehmerelemente 11 bezüglich der Förderrichtung 17 schräg nach vorne ausgerichtet. Dies bewirkt, dass sich die Flaschenverschlüsse 14 bei deren Beförderung in Richtung des in Förderrichtung 17 laufenden Trums 18 bzw. der Profilführung 23 bewegen.

Fig. 12 zeigt eine weitere Ausführungsform eines nicht beanspruchten Förderabschnitts 15 im Betriebszustand mit nur einem Förderriemen 1. Wieder ist das in Förderrichtung 17 laufende Trum 18 in einer Profilführung 23 geführt, die in diesem Fall auch die Förderoberfläche 16 ausbildet.

Entsprechend ragen die Mitnehmerelemente 11 aus der Förderoberfläche 16 heraus. Dabei können die Mitnehmerelemente 11 auch in oder gegen die Förderrichtung 17 geneigt sein. Um den Formschluss der Mitnehmerelemente 11 mit den Flaschenverschlüssen 14 zu verbessern, sind in diesem Fall Mitnehmerelemente 11 mit einem rechteckigen Querschnitt vorgesehen.

Zur seitlichen Begrenzung der Förderoberfläche 16 sind zwei Seitenführungen 57 vorgesehen, auf welchen die Flaschenverschlüsse 14 abgleiten oder abrollen können.

Bei den in Fig. 11 und Fig. 12 gezeigten Ausführungsformen ist es wichtig, dass die Mitnehmerelemente 11, insbesondere deren Stabilität und Steifigkeit, sehr genau an die zu befördernden Kleinteile bzw. deren Gewicht und Größe angepasst sind, um ein ungewolltes Durchrutschen der Kleinteile zu vermeiden und ein Durchrutschen in Blockadesituationen zu ermöglichen.

### BEZUGSZEICHENLISTE

- 1: Förderriemen
- 2: Riemenkörper
- 3: Längsachse des Riemenkörpers
- 4: Breite des Riemenkörpers
- 5: Höhe des Riemenkörpers
- 6: Laufseite des Riemenkörpers
- 7: Förderseite des Riemenkörpers
- 8: Frontseite des Riemenkörpers
- 9: Rückseite des Riemenkörpers
- 10: Querschnittsfläche des Riemenkörpers
- 11: Mitnehmerelement
- 12: Aramidfaser
- 13: Längsachse eines Mitnehmerelements
- 14: Flaschenverschluss
- 15: Förderabschnitt
- 16: Förderoberfläche
- 17: Förderrichtung
- 18: In Förderrichtung laufendes Trum des Förderriemens
- 19: Rücklaufendes Trum des Förderriemens
- 20: Förderspalt
- 21: Erste Querrichtung
- 22: Steilförderabschnitt
- 23: Profilführung
- 24: Erster Flachförderabschnitt
- 25: Zweiter Flachförderabschnitt
- 26: Erster Übergangsabschnitt
- 27: Zweiter Übergangsabschnitt
- 28: Oberführung
- 29: Führungsrolle
- 30: Grundkörper
- 31: Erste Wange
- 32: Zweite Wange
- 33: Zweite Querrichtung
- 34: Anfangsbereich der ersten Wange
- 35: Anfangsbereich der zweiten Wange
- 36: Verformungsweg
- 37: Erste Fördereinheit
- 38: Zweite Fördereinheit
- 39: Gewindespindel
- 40: Halterung für die Oberführung
- 41: Erster Abdeckungsteil
- 42: Zweiter Abdeckungsteil
- 43: Winkel
- 44: Unverlierbare Schraube
- 45: Schraube
- 46: Mutter
- 47: Standfuß
- 48: Beabstandung der Mitnehmerelemente
- 49: Durchmesser der Mitnehmerelemente
- 50: Länge der Mitnehmerelemente
- 51: Verbindungselement
- 52: Achse einer Führungsrolle
- 53: Gewindestange
- 54: Stege des Verbindungselements
- 55: Hauptteil des Verbindungselements
- 56: Stellschraube
- 57: Seitenführung

## Patentansprüche

1. Förderabschnitt (15) zur Beförderung von Kleinteilen, insbesondere von Flaschenverschlüssen (14), umfassend zwei Förderriemen (1) zur Förderung von Kleinteilen, insbesondere von Flaschenverschlüssen (14), wobei jeder Förderriemen (1) einen Riemenkörper (2) umfasst, welcher Riemenkörper (2) senkrecht auf seine Längsachse (3) eine zumindest abschnittsweise eckige Querschnittsfläche (10) aufweist, wobei der Riemenkörper (2) eine Förderseite (7) umfasst, wobei die Querschnittsfläche (10) zumindest abschnittsweise von der Förderseite (7) begrenzt ist und wobei von der Förderseite (7) Mitnehmerelemente (11) abstehen, wobei weiters in einem Betriebszustand des Förderabschnitts (15) jeder Förderriemen (1) ein in einer Förderrichtung (17) laufendes Trum (18) und ein rücklaufendes Trum (19) aufweist, wobei die in Förderrichtung (17) laufenden Trümer (18) einander gegenüberliegend angeordnet sind und einen Förderspalt (20) zur Aufnahme der zu befördernden Kleinteile (14) zumindest abschnittsweise begrenzen, wobei die Förderseiten (7) der in Förderrichtung (17) laufenden Trümer (18) zueinander weisen, und wobei die in Förderrichtung (17) laufenden Trümer (18) über einer Förderoberfläche (16) angeordnet sind, welche Förderoberfläche (16) den Förderspalt (20) in einer ersten Querrichtung (21) begrenzt, **dadurch gekennzeichnet, dass** eine Längsachse (13) der Mitnehmerelemente (11) der in Förderrichtung (17) laufenden Trümer (18) mit der Förderrichtung (17) einen Winkel (43) von 100° bis 130°, vorzugsweise von 120° einschließt, sodass die Mitnehmerelemente (11) schräg nachschleifend angeordnet sind.

2. Förderabschnitt (15) nach Anspruch 1, **dadurch gekennzeichnet, dass** die Mitnehmerelemente (11) borstenfrei ausgeführt sind.

3. Förderabschnitt (15) nach einem der Ansprüche 1 bis 2, **dadurch gekennzeichnet, dass** die Mitnehmerelemente (11) in einer Schnittebene, die parallel zur Förderrichtung (17) und parallel zur ersten Querrichtung (21) ist, zumindest in einem an die Förderseite (7) des jeweiligen Riemenkörpers (2) anschließenden Bereich einen Querschnitt aufweisen, welcher eine größere Erstreckung parallel zur Förderrichtung (17) aufweist als parallel zur ersten Querrichtung (21).

4. Förderabschnitt (15) nach einem der Ansprüche 1 bis 3, **dadurch gekennzeichnet, dass** die Mitnehmerelemente (11) des einen in Förderrichtung (17) laufenden Trums (18) zu den Mitnehmerelementen (11) des anderen in Förderrichtung (17) laufenden Trums (18) einen in Förderrichtung (17) gemessenen Abstand größer null aufweisen.

5. Förderabschnitt (15) nach einem der Ansprüche 1 bis 4, **dadurch gekennzeichnet, dass** eine Oberführung (28) vorgesehen ist, die der Förderoberfläche (16) gegenüberliegend angeordnet ist und den Förderspalt (20) ebenfalls in der ersten Querrichtung (21) begrenzt.

6. Förderabschnitt (15) nach Anspruch 5, **dadurch gekennzeichnet, dass** der Förderabschnitt (15) einen Steilförderabschnitt (22) aufweist, in welchem die Förderoberfläche (16) mit der Horizontalen einen Winkel von mindestens 30°, vorzugsweise mindestens 80°, besonders bevorzugt im Wesentlichen 90° einschließt.

7. Förderabschnitt (15) nach Anspruch 6, **dadurch gekennzeichnet, dass** die in Förderrichtung (17) laufenden Trümer (18) im Steilförderabschnitt (22) in Profilführungen (23) geführt sind.

8. Förderabschnitt (15) nach Anspruch 7, **dadurch gekennzeichnet, dass** die Profilführungen (23) die Querschnittsfläche (10) des Riemenkörpers (10) jedes in Förderrichtung (17) laufenden Trums (18) bis auf dessen Förderseite (7) vollumfänglich und dessen Förderseite (7) abschnittsweise umschließen.

9. Förderabschnitt (15) nach einem der Ansprüche 1 bis 8, **dadurch gekennzeichnet, dass** die rücklaufenden Trümer (19) zumindest abschnittsweise (27) mittels Führungsrollen (29) geführt sind.

10. Förderabschnitt (15) nach einem der Ansprüche 1 bis 9, **dadurch gekennzeichnet, dass** die Förderoberfläche (16) Teil eines, vorzugsweise als Metallprofil ausgeführten Grundkörpers (30) ist, an welchem Grundkörper (30) eine erste Wange (31) und eine zweite Wange (32) befestigt sind, wobei in einer zweiten Querrichtung (33) gesehen die erste Wange (31) vor dem Grundkörper (30) angeordnet ist und die zweite Wange (32) hinter dem Grundkörper (30), wobei die zweite Querrichtung (33) normal auf die erste Querrichtung (21) und auf die Förderrichtung (17) steht, und dass die Position der ersten Wange (31) am Grundkörper (30) und die Position der zweiten Wange (32) am Grundkörper (30) parallel zur ersten Querrichtung (21) verstellbar sind.

11. Förderabschnitt (15) nach Anspruch 10, **dadurch gekennzeichnet, dass** in der ersten Querrichtung (21) gesehen in einem Anfangsbereich (34) der ersten Wange (31) ein erstes Positionierelement befestigt ist und in einem Anfangsbereich (35) der zweiten Wange (32) ein zweites Positionierelement, dass am ersten Positionierelement eine erste Fördereinheit (37) befestigt ist und am zweiten Positionierelement eine zweite Fördereinheit (38), wobei die erste Fördereinheit (37) und die zweite Fördereinheit (38) jeweils einen der Förderriemen (1) und dessen Führungen (23, 29) umfassen, und dass die Position der ersten Fördereinheit (37) am ersten Positionierelement sowie die Position der zweiten Fördereinheit (38) am zweiten Positionierelement parallel zur zweiten Querrichtung (33) verstellbar sind.

12. Förderabschnitt (15) nach einem der Ansprüche 10 bis 11, **dadurch gekennzeichnet, dass** die Oberführung (28) mittels einer Halterung (40) am Grundkörper (30) befestigt ist, wobei die Position der Oberführung (28) parallel zur ersten Querrichtung (21), vorzugsweise an der Halterung (40), verstellbar ist.

13. Förderabschnitt (15) nach einem der Ansprüche 11 bis 12, **dadurch gekennzeichnet, dass** eine Abdeckung des Förderabschnitts (15) vorgesehen ist, dass die Abdeckung erste Abdeckungsteile (41) und mindestens einen zweiten Abdeckungsteil (42) aufweist, dass die ersten Abdeckungsteile (41) an der ersten Wange (31) und/oder der zweiten Wange (32) fixiert sind und dass der mindestens eine zweite Abdeckungsteil (42) lösbar mit dem ersten Positionierelement und/oder dem zweiten Positionierelement verbunden ist.

14. Förderabschnitt (15) nach Anspruch 13, **dadurch gekennzeichnet, dass** der mindestens eine zweite Abdeckungsteil (42) transparent ausgeführt ist.

15. Förderabschnitt (15) nach einem der Ansprüche 1 bis 14, **dadurch gekennzeichnet, dass** Sensoren vorgesehen sind, um die Position und/oder die Geschwindigkeit der Mitnehmerelemente (11) des einen in Förderrichtung (17) laufenden Trums (18) relativ zur Position und/oder Geschwindigkeit der Mitnehmerelemente (11) des anderen in Förderrichtung (17) laufenden Trums (18) zu überwachen, wobei die Mitnehmerelemente (11) der in Förderrichtung (17) laufenden Trümer (18) vorzugsweise zwischen den Sensoren und der Förderoberfläche (16) angeordnet sind.

## Claims

1. A conveyor portion (15) for conveying small parts, in particular bottle caps (14), comprising two conveyor belts (1) for conveying small parts, in particular bottle caps (14), wherein each conveyor belt (1) comprises a belt body (2), which belt body (2), perpendicular to its longitudinal axis (3), comprises a cross-sectional area (10) which is angular at least in sections, wherein the belt body (2) has a conveying side (7), wherein the cross-sectional area (10) is bounded at least in some sections by the conveying side (7), and wherein carrier elements (11) protrude from the conveying side (7), wherein further, in an operating state of the conveyor portion (15), each conveyor belt (1) comprises a strand (18) running in one conveying direction (17) and a returning strand (19), wherein the strands (18) running in the conveying direction (17) are disposed opposite each other and delimit a conveying gap (20), at least in some sections, for accommodating the small parts (14) to be conveyed, wherein the conveying sides (7) of the strands (18) running in the conveying direction (17) face each other, and wherein the strands (18) running in the conveying direction (17) are arranged above a conveying surface (16), which conveying surface (16) delimits the conveying gap (20) in a first transverse direction (21), **characterized in that** a longitudinal axis (13) of the carrier elements (11) of the strands (18) running in the conveying direction (17) enclose an angle (43) of 100° to 130°, preferably 120°, with the conveying direction (17), so that the carrier elements (11) are arranged in an obliquely trailing manner.

2. A conveyor portion (15) according to claim 1, **characterized in that** the carrier elements (11) are formed in a bristle-free manner.

3. A conveyor portion (15) according to one of the claims 1 to 2, **characterized in that** the carrier elements (11) have a cross-section in a section plane, which is parallel to the conveying direction (17) and parallel to the first transverse direction (21), at least in a region adjoining the conveying side (7) of the respective belt body (2), which cross-section has a greater extension parallel to the conveying direction (17) than parallel to the first transverse direction (21).

4. A conveyor portion (15) according to one of the claims 1 to 3, **characterized in that** the carrier elements (11) of the one strand (18) running in the conveying direction (17) in relation to the carrier elements (11) of the other strand (18) running in the conveying direction (17) have a distance of greater zero as measured in the conveying direction (17).

5. A conveyor portion (15) according to one of the claims 1 to 4, **characterized in that** an upper guide (28) is provided which is arranged opposite the conveying surface (16) and also delimits the conveying gap (20) in the first transverse direction (21).

6. A conveyor portion (15) according to claim 5, **characterized in that** the conveyor portion (15) comprises a steep conveyor portion (22) in which the conveying surface (16) encloses with the horizontal an angle of at least 30°, preferably at least 80°, more preferably substantially 90°.

7. A conveyor portion (15) according to claim 6, **characterized in that** the strands (18) running in the conveying direction (17) are guided in profile guides (23) in the steep conveyor portion (22).

8. A conveyor portion (15) according to claim 7, **characterized in that** the profile guides (23) surround the cross-sectional area (10) of the belt body (10) of each strand (18) running in the conveying direction (17) in full apart from its conveying side (7) and surround its conveying side (7) in sections.

9. A conveyor portion (15) according to one of the claims 1 to 8, **characterized in that** the returning strands (19) are guided at least in sections (27) by means of guide rollers (29).

10. A conveyor portion (15) according to one of the claims 1 to 9, **characterized in that** the conveying surface (16) is part of a base body (30) which is preferably formed as a metal profile, on which base body (30) a first cheek (31) and a second cheek (32) are fastened, wherein, as seen in a second transverse direction (33), the first cheek (31) is arranged in front of the base body (30) and the second cheek (32) is arranged behind the base body (30), wherein the second transverse direction (33) stands normally to the first transverse direction (21) and to the conveying direction (17), and that the position of the first cheek (31) on the base body (30) and the position of the second cheek (32) on the base body (30) are adjustable parallel to the first transverse direction (21).

11. A conveyor portion (15) according to claim 10, **characterized in that** a first positioning element is fastened in an initial region (34) of the first cheek (31) as seen in the first transverse direction (21), and a second positioning element in an initial region (35) of the second cheek (32), that a first conveyor unit (37) is fastened to the first positioning element and a second conveyor unit (38) to the second positioning element, wherein the first conveyor unit (37) and the second conveyor unit (38) each comprise one of the conveyor belts (1) and its guides (23, 29), and that the position of the first conveyor unit (37) on the first positioning element and the position of the second conveyor unit (38) on the second positioning element are adjustable parallel to the second transverse direction (33).

12. A conveyor portion (15) according to one of the claims 10 to 11, **characterized in that** the upper guide (28) is fastened by means of a retainer (40) on the base body (30), wherein the position of the upper guide (28) is adjustable parallel to the first transverse direction (21), preferably on the retainer (40).

13. A conveyor portion (15) according to one of the claims 11 to 12, **characterized in that** a cover of the conveyor portion (15) is provided, that the cover comprises first cover parts (41) and at least one second cover part (42), that the first cover parts (41) are fixed to the first cheek (31) and/or the second cheek (32), and that the at least one second cover part (42) is detachably connected to the first positioning element and/or the second positioning element.

14. A conveyor portion (15) according to claim 13, **characterized in that** the at least one second cover part (42) is formed in a transparent manner.

15. A conveyor portion (15) according to one of the claims 1 to 14, **characterized in that** sensors are provided to monitor the position and/or the velocity of the carrier elements (11) of the one strand (18) running in the conveying direction (17) relative to the position and/or the velocity of the carrier elements (11) of the other strand (18) running in the conveying direction (17), wherein the carrier elements (11) of the strands (18) running in the conveying direction (17) are preferably arranged between the sensors and the conveying surface (16).

## Revendications

1. Section de transport (15) pour le transport de petites pièces, en particulier de bouchons de bouteille (14), comprenant deux courroies de transport (1) pour le transport de petites pièces, en particulier de bouchons de bouteille (14), chaque courroie de transport (1) comprenant un corps de courroie (2), lequel corps de courroie (2) présente perpendiculairement à son axe longitudinal (3) une aire de section (10) au moins en partie anguleuse, le corps de courroie (2) comprenant une face de transport (7), l'aire de section (10) étant au moins en partie délimitée par la face de transport (7) et des éléments entraîneurs (11) dépassant de la face de transport (7), chaque courroie de transport (1) présentant en outre, dans un état de fonctionnement de la section de transport (15), un brin menant (18) circulant dans le sens de transport (17) et un brin de retour (19), les brins (18) circulant dans le sens de transport (17) étant disposés l'un en face de l'autre et délimitant au moins par zones un intervalle de transport (20) pour recevoir les petites pièces (14) à transporter, les faces de transport (7) des brins (18) circulant dans le sens de transport (17) étant tournées l'une vers l'autre et les brins (18) circulant dans le sens de transport (17) étant disposés au-dessus d'une surface de transport (16), laquelle surface de transport (16) délimite l'intervalle de transport (20) dans un premier sens transversal (21), **caractérisée en ce qu'**un axe longitudinal (13) des éléments entraîneurs (11) des brins (18) circulant dans le sens de transport (17) forme avec le sens de transport (17) un angle (43) de 100° à 130°, de préférence de 120°, de sorte que les éléments entraîneurs (11) sont disposés à l'oblique et frottent sur l'arrière.

2. Section de transport (15) selon la revendication 1, **caractérisée en ce que** les éléments entraîneurs (11) sont réalisés sans brosses.

3. Section de transport (15) selon l'une des revendications 1 à 2, **caractérisée en ce que** les éléments entraîneurs (11) présentent, dans un plan de coupe parallèle au sens de transport (17) et parallèle au premier sens transversal (21), au moins dans une zone se raccordant à la face de transport (7) du corps de courroie (2) correspondant, une section qui est plus étendue parallèlement au sens de transport (17) que parallèlement au premier sens transversal (21).

4. Section de transport (15) selon l'une des revendications 1 à 3, **caractérisée en ce que** les éléments entraîneurs (11) d'un brin (18) circulant dans le sens de transport (17) présentent par rapport aux éléments entraîneurs (11) de l'autre brin (18) circulant dans le sens de transport (17) un écartement mesuré dans le sens de transport (17) supérieur à zéro.

5. Section de transport (15) selon l'une des revendications 1 à 4, **caractérisée en ce qu'**il est prévu un guidage par dessus (28) qui est disposé en face de la surface de transport (16) et qui délimite également l'intervalle de transport (20) dans le premier sens transversal (21).

6. Section de transport (15) selon la revendication 5, **caractérisée en ce que** la section de transport (15) présente une section de transport à forte pente (22) dans laquelle la surface de transport (16) forme avec l'horizontale un angle d'au moins 30°, de préférence au moins 80°, en particulier sensiblement 90°.

7. Section de transport (15) selon la revendication 6, **caractérisée en ce que** les brins (18) circulant dans le sens de transport (17) sont guidés dans la section de transport à forte pente (22) dans des guides profilés (23).

8. Section de transport (15) selon la revendication 7, **caractérisée en ce que** les guides profilés (23) entourent complètement l'aire de section (10) du corps de courroie (10) de chaque brin (18) circulant dans le sens de transport (17), sauf la face de transport (7) de celui-ci, et partiellement sa face de transport (7).

9. Section de transport (15) selon l'une des revendications 1 à 8, **caractérisée en ce que** les brins de retour (19) sont guidés au moins en partie (27) au moyen de galets de guidage (29).

10. Section de transport (15) selon l'une des revendications 1 à 9, **caractérisée en ce que** la surface de transport (16) fait partie d'un corps de base (30) réalisé de préférence sous la forme d'un profilé métallique, corps de base (30) auquel sont fixées une première joue (31) et une deuxième joue (32), la première joue (31) étant disposée, vue dans un deuxième sens transversal (33), avant le corps de base (30) et la deuxième joue (32) derrière le corps de base (30), le deuxième sens transversal (33) étant perpendiculaire au premier sens transversal (21) et au sens de transport (17), et **en ce que** la position de la première joue (31) sur le corps de base (30) et la position de la deuxième joue (32) sur le corps de base (30) est réglable parallèlement au premier sens transversal (21).

11. Section de transport (15) selon la revendication 10, **caractérisée en ce qu'**un premier élément de positionnement est fixé dans une zone de commencement (34) de la première joue (31), vu dans le premier sens transversal (21), et un deuxième élément de positionnement dans une zone de commencement (35) de la deuxième joue (32), **en ce qu'**une première unité de transport (37) est fixé sur le premier élément de positionnement et une deuxième unité de transport (38) sur le deuxième élément de positionnement, la première unité de transport (37) et la deuxième unité de transport (38) comprenant chacune une des courroies de transport (1) et ses guides (23, 29), et **en ce que** la position de la première unité de transport (37) sur le premier élément de positionnement et la position de la deuxième unité de transport (38) sur le deuxième élément de positionnement sont réglables parallèlement au deuxième sens transversal (33).

12. Section de transport (15) selon l'une des revendications 10 à 11, **caractérisée en ce que** le guidage par dessus (28) est fixé sur le corps de base (30) au moyen d'une monture (40), la position du guidage par dessus (28) parallèlement au premier sens transversal (21) étant réglable, de préférence sur la monture (40).

13. Section de transport (15) selon l'une des revendications 11 à 12, **caractérisée en ce qu'**une couverture de la section de transport (15) est prévue, **en ce que** la couverture présente des premières parties de couverture (41) et au moins une deuxième partie de couverture (42), **en ce que** les premières parties de couverture (41) sont fixées sur la première joue (31) et/ou la deuxième joue (32) et **en ce que** l'au moins une deuxième partie de couverture (42) est reliée de manière amovible au premier élément de positionnement et/ou au deuxième élément de positionnement.

14. Section de transport (15) selon la revendication 13, **caractérisée en ce que** l'au moins une deuxième partie de couverture (42) est transparente.

15. Section de transport (15) selon l'une des revendications 1 à 14, **caractérisée en ce que** des capteurs sont prévus pour surveiller la position et/ou la vitesse des éléments entraîneurs (11) du brin (18) circulant dans le sens de transport (17) par rapport à la position et/ou à la vitesse des éléments entraîneurs (11) de l'autre brin (18) circulant dans le sens de transport (17), les éléments entraîneurs (11) des brins (18) circulant dans le sens de transport (17) étant de préférence disposés entre les capteurs et la surface de transport (16).
